# EUROPÄISCHE PATENTANMELDUNG

(11) **EP 1 467 134 A1**
(43) Veröffentlichungstag der Anmeldung: **13.10.2004**
(21) Anmeldenummer: 04008451.9
(22) Anmeldetag: 07.04.2004
(51) Int. Cl.: F16K 31/08

(54) **Elektromagnetisches Doppelventil mit gemeinsamer Spule**

(30) Priorität: 08.04.2003 DE 10316098
(71) Anmelder: HONEYWELL B.V., 1101 EA Amsterdam Z.O. (NL)
(72) Erfinder: Baarda, Gerrit Jan, 1101 EA Amsterdam Z.O. (NL); Van Prooijen, Frank, 1101 EA Amsterdam Z.O. (NL)
(74) Vertreter: Leson, Thomas Johannes Alois, Dipl.-Ing.

(57) **Zusammenfassung**

Offenbart wird ein elektromagnetisches Doppelventil mit einer in einem Ventilgehäuse angeordneten elektromagnetischen Spule (4) und zwei in dem Ventilgehäuse angeordneten, in ihren Polungsrichtungen verschieblichen Ventilkörpern (1,2). Die Ventilkörper weisen Dauermagneten auf, die durch eine Magnetisierung der Spule so verschoben werden, dass sich die Ventilkörper jeweils von einem Ventilsitz (5,6) weg oder darauf zu bewegen und dadurch eine in dem jeweiligen Ventilsitz befindliche Ventilöffnung (21,22) öffnen oder verschließen. Das Doppelventil kann als Servoventil zum Regeln von Hauptventilen eingesetzt werden.

## Beschreibung

Die Erfindung bezieht sich auf ein elektromagnetisches Doppelventil mit gemeinsamer Spule.

Elektromagnetische Ventile kommen zum Beispiel bei Regeleinrichtungen für Gasbrenner zum Einsatz. Bekannte Regeleinrichtungen für Gasbrenner verfügen über ein Hauptventil, ein Servoventil und einen Servoregler.

Häufig wird bei Regeleinrichtungen für Gasbrenner jedoch ein erhöhter Sicherheitsstandard verlangt. Gemäß diesem wird eine erhöhte Sicherheit hinsichtlich des Schließens des Hauptventils und eine Unterbrechung des Gasflusses verlangt. Derartigen Sicherheitsanforderungen wird üblicherweise durch ein zweites in Reihe geschaltetes Hauptventil Rechnung getragen. Bei einer derartigen Konstruktion wird verlangt, dass auch bei Defekt oder Ausfall eines der Hauptventile der Gasstrom sicher unterbrochen wird. Derartige Regeleinrichtungen erlauben in den meisten Fällen jedoch keine Modulation des Druckes oder die Modulation ist ausgesprochen schwierig bzw. wird den diesbezüglichen Anforderungen nur unzureichend gerecht.

Auf Grund der beiden in Reihe geschalteten Hauptventile ist es für deren Steuerung notwendig auch zwei Servoventile vorzusehen.

Aufgabe der Erfindung ist es daher, ein Doppelventil zu schaffen, das den geforderten Sicherheitsstandards genügt und dabei kostengünstig herzustellen ist.

Diese Aufgabe wird mit den Merkmalen des Anspruchs 1 gelöst.

Gemäß der Erfindung wird ein elektromagnetisches Doppelventil mit einer in einem Ventilgehäuse angeordneten elektromagnetischen Spule und zwei in dem Ventilgehäuse verschieblich vorgesehenen Ventilkörpern vorgeschlagen, die Dauermagneten aufweisen und in der Polungsrichtung der Dauermagneten verschiebbar sind. Durch eine Magnetisierung der Spule werden die Ventilkörper so verschoben, dass sie sich jeweils von einem Ventilsitz weg oder darauf zu bewegen und dadurch eine in dem jeweiligen Ventilsitz befindliche Ventilöffnung öffnen oder schließen. Somit kann vorteilhafterweise ein Doppelventil mit nur einer Spule betätigt werden.

Darüber hinaus ist das Doppelventil so ausgebildet, dass die Spule zwischen den Ventilkörpern mit ihren Dauermagneten angeordnet ist und dass deren Polungsrichtungen entweder beide mit der zugehörigen Polungsrichtung der elektromagnetischen Spule gleichgerichtet sind oder beide zu der zugehörigen Polungsrichtung der elektromagnetischen Spule entgegengesetzt gerichtet sind. Somit kann das Doppelventil in einer für die Herstellung günstigen, symmetrischen Anordnung ausgebildet werden.

Die beiden Ventilkörper und die Spule sind jeweils in einer Kammer angeordnet, sodass das Doppelventilgehäuse aus zumindest drei Kammern aufgebaut ist, die durch zwei innere Ventilsitze voneinander getrennt sind. Auf den Außenseiten der äußeren Kammern, in denen die Ventilkörper untergebracht sind, können außerdem jeweils äußere Ventilsitze angeordnet sein. Die Ventilsitze haben jeweils Öffnungen mit einem bestimmten Querschnitt, die durch Verschieben des Ventilkörpers auf den zugehörigen Ventilsitz geschlossen werden können. Somit verfügt jede Kammer mit dem zugehörigen Ventilkörper, den zugehörigen Ventilsitzen und deren Öffnungen über eine Ventilfunktion.

Vorteilhafterweise ist in den beiden die Ventilkörper aufnehmenden Kammern jeweils eine weitere Öffnung mit bestimmtem Querschnitt vorgesehen. Diese Kammern bilden somit, mit den zugehörigen Ventilsitzen, deren Öffnungen und den zugehörigen Ventilkörpern jeweils ein 3-Wege-Ventil. Somit ist ein Doppelventil geschaffen, dessen beide 3-Wege-Ventile über nur eine Spule betätigt werden können.

Wird eine Druckmodulation gewünscht ist es zweckmäßig dabei in zumindest einem Doppelventil eine Vorspanneinrichtung vorzusehen, die den Ventilkörper entgegen der Magnetisierungsrichtung der Spule gegen den entsprechenden Ventilsitz drückt. Somit wird sowohl eine Verschlusssicherheit des Ventils beim Ausfall der Magnetisierung als auch die Möglichkeit gegeben, den Fluidstrom durch das Ventil hindurch entsprechend einer Magnetisierungskraft der Spule gegen den Widerstand der Feder zu modulieren.

Weiterhin kann es vorteilhaft sein Vorspanneinrichtungen in beiden Kammern einzusetzen. Diese können mit unterschiedlichen Vorspannkräften, bzw. Vorspannwiederständen versehen sein, sodass dementsprecnend unterschiedliche Modulationen der Fluidströme in den Ventilen möglich sind.

In dem erfindungsgemäßen Doppelventil können die Spule und die Ventilkörper hinsichtlich ihrer Verschiebungsrichtung auf einer Achse oder auf parallelen Achsen angeordnet sein. Es ist aber auch denkbar, die Spule abgewinkelt vorzusehen und die Dauermagneten auf den den Abwinklungen der Spule entsprechenden Achsen anzuordnen.

In beiden Fällen kann die Spule einen Kern aufweisen, der die magnetische Kraft der Spule verstärkt, wobei die Spule wahlweise gerade oder abgewinkelt und der Kern auch wahlweise gerade oder abgewinkelt ausgebildet sein kann. Somit lässt sich die geometrische Anordnung der Kammern entsprechend den Erfordernissen hinsichtlich Zu- und Abfluss des Fluids günstig ausbilden. Dabei ist es durchaus denkbar, dass die Winkel zwischen den Achsen der Spule und/oder des Kerns und die zugehörigen Winkel zwischen den Achsen der Ventilkörper um einige Grad voneinander abweichen, ohne die Funktionsfähigkeit des Doppelventils einzuschränken. Ebenso müssen die Achsen auch nicht innerhalb ein und der selben Ebene liegen, sondern können räumlich etwas versetzt sein.

Das wie vorstehend beschrieben aufgebaute Doppelventil kann dann als Servoventil zum Regeln von Hauptventilen eingesetzt werden.

Anhand der beiliegenden schematischen Figuren werden bevorzugte Ausführungsbeispiele der Erfindung beschrieben.

Fig. 1 zeigt eine Schnittansicht eines Doppelventils gemäß einem ersten Ausführungsbeispiel.

Fig. 2 zeigt eine Schnittansicht eines Doppelventils gemäß einem zweiten Ausführungsbeispiel.

Fig. 3 zeigt eine Schnittansicht eines Doppelventils gemäß einem dritten Ausführungsbeispiel.

Fig. 4 zeigt eine Schnittansicht des Doppelventils aus Fig. 1 in der Verwendung als Servoventil für in Reihe geschaltete Hauptventile.

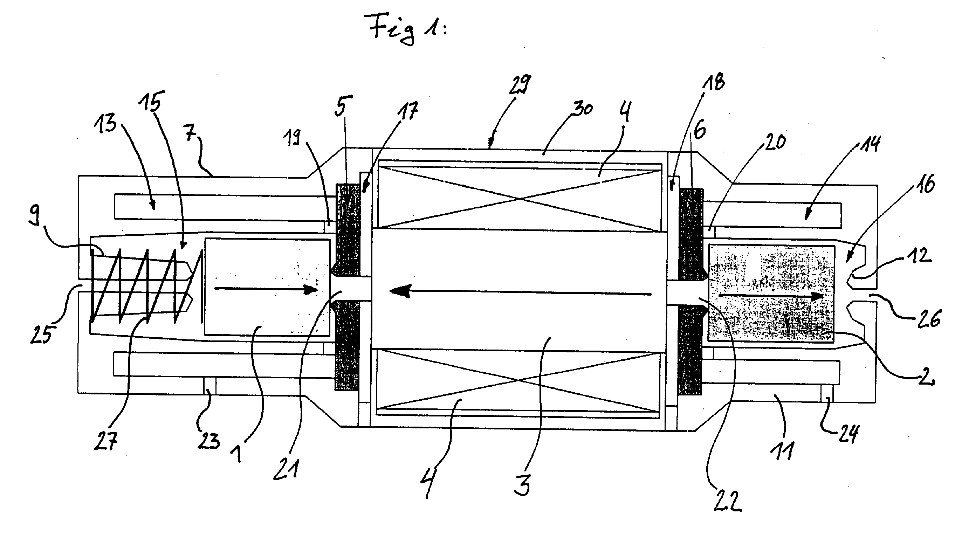

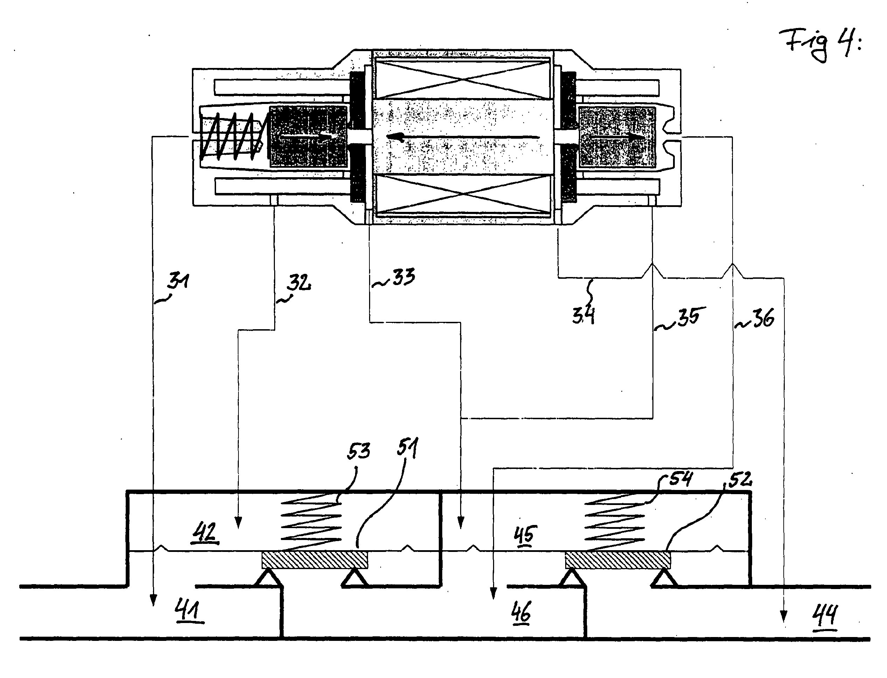

Zunächst wird an Hand von Figuren 1 und 4 der Aufbau eines Doppelventils gemäß einem ersten Ausführungsbeispiel beschrieben, das als Servodoppelventil zur Regelung von zwei Hauptventilen dient. Dabei ist davon auszugehen, dass das Fluid die Hauptventile von links nach rechts durchströmt.

Das Doppelventil ist im Wesentlichen aus einem linken Ventilabschnitt 7, einem Spulenabschnitt 29 und einem rechten Ventilabschnitt 11 aufgebaut. Der linke Ventilabschnitt 7 verfügt über eine innere Kammer 15 und eine um die innere Kammer 15 herum konzentrisch ausgebildete äußere Kammer 13. Die äußere Kammer 13 steht über Öffnungen 19 mit der inneren Kammer 15 in Verbindung und weist überdies eine Öffnung 23 nach außen auf, die als Anschluss für eine Fluidleitung 32 dient. Die innere Kammer nimmt einen Ventilkörper 1 in sich auf, der durch hinund herbewegen entweder eine äußere Öffnung 25 in einem äußeren Ventilsitz 9 oder eine innere Öffnung 21 in einem inneren Ventilsitz 5 öffnet oder schließt. Der Ventilkörper 1 besteht im Wesentlichen aus einem Dauermagneten, der über eine bestimmte Polungsrichtung verfügt und mittels einer Feder 27 gegen den inneren Ventilsitz 5 gedrückt wird, sodass er die Öffnung 21 verschließt.

Im geöffneten Zustand verbindet die Öffnung 21 die innere Kammer 15 des linken Ventilgehäuses mit einer Zwischenkammer 17, die sich zwischen dem inneren Ventilsitz 5 des linken Gehäuses 7 und dem Spulenkörper 3, 4 befindet und die eine Öffnung 8 als Anschluss für eine Fluidleitung 33 nach außen aufweist. Der Spulenkörper 3, 4 besteht aus einem schwach magnetischen Kern 3 und einer darum gewickelten Spule 4.

Auf der rechten Seite des Spulenabschnitts 29 befindet sich ein zu dem linken Ventilabschnitt 7 im Wesentlichen symmetrisches rechtes Ventilgehäuse 11. Das rechte Ventilgehäuse 11 verfügt ebenfalls über eine innere Kammer 16 und eine um die innere Kammer 15 herum konzentrisch ausgebildete äußere Kammer 14. Die äußere Kammer 14 steht über Öffnungen 20 mit der inneren Kammer 14_in Verbindung und weist eine Öffnung 24 als Anschluss fur eine Fluidleitung 35 nach außen auf. Die innere Kammer 16 nimmt einen Ventilkörper 2 in sich auf, der durch hin- und herbewegen entweder eine äußere Öffnung 26 in einem äußeren Ventilsitz 12 oder eine innere Öffnung 22 in einem inneren Ventilsitz 6 öffnet oder verschließt. Der Ventilkörper 2 besteht im Wesentlichen aus einem Dauermagneten der über eine bestimmte Polungsrichtung verfügt. Eine Feder zum Vorspannen des Ventilkörpers 2 gegen den inneren Ventilsitz 6 ist jedoch nicht in dem rechten Ventilgehäuse 11 vorgesehen.

Im geöffneten Zustand verbindet die Öffnung 22 die innere Kammer 16 des rechten Ventilgehäuses 11 mit einer Zwischenkammer 18, die sich zwischen dem inneren Ventilsitz 6 des rechten Gehäuses 11 und dem Spulenabschnitt 29 befindet und die eine Öffnung 10 aufweist, die als Anschluss für eine Fluidleitung 34 dient.

Der zwischen den Ventilabschnitten 7, 11 liegende Spulenabschnitt 29 besteht aus einem Spulengehäuse 30, einem Kern 3 und einer um den Kern 3 herum gewickelten Spule 4. Die Spule 4 ist an eine (nicht dargestellte) Energiequelle angeschlossen und wird bei Zufuhr von elektrischer Energie so erregt, dass sie eine magnetische Kraft erzeugt. Die Polungsrichtung der Dauermagneten 1, 2 so gewählt, dass zwischen dem Kern 3 und dem jeweiligen Dauermagneten 1, 2 eine magnetisch abstoßende Kraft herrscht, wenn die Spule erregt ist und eine magnetisch anziehende Kraft herrscht, wenn die Spule 4 nicht erregt ist. Somit sitzen die Dauermagneten 1, 2 auf den Ventilsitzen 5, 6 und verschließen die Öffnungen 21, 22 im entregten Zustand der Spule 4. Erst beim Erregen der Spule 4 werden die Dauermagneten von den Ventilsitzen 5, 6 weggeschoben und die Öffnungen 21, 22 werden geöffnet.

Somit sind zwei Doppelventile geschaffen die folgendermaßen arbeiten: Befinden sich die Ventilkörper 1, 2 im nicht erregten Zustand der Spule 4 auf den inneren Ventilsitzen 5, 6 und verschließen somit die Öffnungen 21, 22, ist in den Ventilen ein Durchströmen von Öffnung 25 zu Öffnung 23 bzw. von Öffnung 22 zu Öffnung 26 möglich. Befinden die Ventilkörper 1, 2 hingegen auf den äußeren Ventilsitzen 9, 12 und verschließen somit die Öffnungen 25, 16, so ist in den Ventilen ein Durchströmen von Öffnungen 23 bzw. 24 zu Öffnungen 21 bzw. 22 und somit zu Öffnungen 8 bzw. 10 möglich. Durch die Ausgestaltung der zugehörigen Kammern und Öffnungen lassen sich dabei die Strömungswiderstände wie gewünscht einstellen.

Im geschlossenen Zustand der Servoventile, das heißt wenn die Spule 4 nicht erregt ist, zieht der zwischen den Ventilgehäusen 7 und 11 liegende Kern 3 die beiden Dauermagneten 1 und 2 an.

Da die Öffnungen 21 und 22 somit verschlossen sind, sind auch die Leitungen 33 und 34, die mit den Öffnungen 8 bzw. 10 in Verbindung sind, geschlossen. Da jedoch die Öffnungen 25 und 26 geöffnet sind wird eine Fluidverbindung von dem Zufluss 41 des Hauptventils 51 über die Leitung 31, die Öffnung 25, die innere Kammer 15, die Öffnungen 19, die äußere Kammer 13, die Öffnung 23 und die Leitung 32 zu der Kammer 42 des Hauptventils 51 geschaffen, womit auf Grund des damit entstehenden Druckausgleichs zwischen dem Zufluss 41 und der Kammer 42 das Hauptventil 51 durch die Kraft der Feder 53 geschlossen gehalten wird.

Sollte nun aus irgendwelchen Gründen das Hauptventil 51 versagen und das Fluid von dem Zufluss 41 in die Kammer 46 strömen, erhöht sich der Druck in der Kammer 46, woraufhin Fluid von der Kammer 46 über die Leitung 36 durch die Öffnung 26, die innere Kammer 16, die Öffnungen 20, die äußere Kammer 14, die Öffnung 24 und die Leitung 35 in die Kammer 45 strömt, wodurch auf Grund des dadurch entstandenen Druckausgleichs zwischen der Kammer 46 und der Kammer 45 und auf Grund der zusätzlichen Federkraft der Feder 54 das Hauptventil 52 geschlossen gehalten wird. Auf Grund der Anziehungskraft zwischen Dauermagnet 2 und Spulenkern 3 und der Strömungsrichtung des Fluids bleibt dabei die Öffnung 22 im Ventilsitz 6 zuverlässig geschlossen. Somit ist der Sicherheitsaspekt der in Reihe geschalteten Hauptventile 51, 52 gegeben, dass zumindest eines der Hauptventile 51, 52 sicher geschlossen ist.

Um die Hauptventile 51, 52 zu öffnen und einen Durchfluss durch sie hindurch zu erwirken wird nun die Spule 4 des Servodoppelventils unter Zuhilfenahme der (nicht dargestellten) Energiequelle erregt. Dabei entsteht eine magnetische Kraft zwischen dem Spulenkörper 3, 4 und dem Dauermagneten 1, 2, die zunächst den Dauermagneten 2 von dem Ventilsitz 6 weg zu dem Ventilsitz 12 hin drückt. Die Öffnung 22 wird geöffnet und die Öffnung 26 wird verschlossen. Somit erzeugt das in dem Abfluss 44 abströmende Fluid über die Leitung 34, die Öffnung 10, die Kammer 18, die Öffnung 22, die innere Kammer 16, die Öffnungen 20, die äußere Kammer 14, die Öffnung 24 und die Leitung 35 einen Unterdruck in der Kammer 45.

Wird die Spule 4 stärker erregt, wird zusätzlich der Dauermagnet 1 gegen den Widerstand der Feder 27 um einen dem Verhältnis von Federkonstante k der Feder 27 und Magnetisierungskraft entsprechenden Verschiebungsbetrag gedrückt und öffnet dadurch die Öffnung 21 ohne dabei die Öffnung 25 zu verschließen. Das heißt, das von dem Zufluss 41 durch die Leitung 31 strömende Fluid kann sowohl durch die Leitung 32 in die Kammer 42 als auch durch die Leitungen 33 und 35 über das Ventilgehäuse 11 durch Leitung 34 zum Abfluss 44 strömen. Dabei strömt um so mehr Fluid in Richtung des Abfluss 44 je weiter der Ventilkörper 1 von dem Ventilsitz weggedrückt wird, das heißt je stärker die magnetisch abstoßende Kraft der Spule 4 auf Grund ihrer elektrischen Anregung ist. Da das Fluid in diesem Zustand von der Öffnung 9 durch die innere Kammer 15 zu der Öffnung 21 strömt, entsteht in der äußeren Kammer 13 ein Unterdruck, der sich über die Leitung 32 auf die Kammer 42 des Hauptventils 51 auswirkt. Dadurch wird der Druckausgleich zwischen der Kammer 42 und dem Zufluss 41 aufgehoben und in der Kammer 42 entsteht ein Unterdruck. Das Ventil 51 öffnet sich, wenn der Druckunterschied zwischen der Kammer 41 und der Kammer 42 größer als der entsprechende Widerstand der Feder 53 wird und sein Öffnungsbetrag kann über den Verschiebungsbetrag des Ventilkörpers 1, der über die Magnetisierung der Spule 4 gesteuert wird, und somit über den Unterdruck in der äußeren Kammer 13 moduliert werden.

Durch das geöffnete Hauptventil 51 strömt Fluid von dem Zufluss 41 in die Kammer 46 und erhöht den Druck in Kammer 46. Da, wie dies vorstehend beschrieben ist, in der Kammer 45 ein Unterdruck vorherrscht und in Kammer 46 ein Überdruck wirkt, wird nun auch das Hauptventil 52 geöffnet und ein Durchfluss des Fluids durch beide Hauptventile 51, 52 ermöglicht.

Bei Nichterregung der Spule 4 werden beide Hauptventile wieder zuverlässig geschlossen, wie dies vorstehend beschrieben wurde.

Somit lässt sich mit einem Doppelventil als Servoventil mit nur einer Spule ein doppeltes Hauptventil regeln, wobei außerdem den Sicherheitsanforderungen hinsichtlich des Schließens der Hauptventile zur Unterbrechung des Gasflusses Rechnung getragen wird.

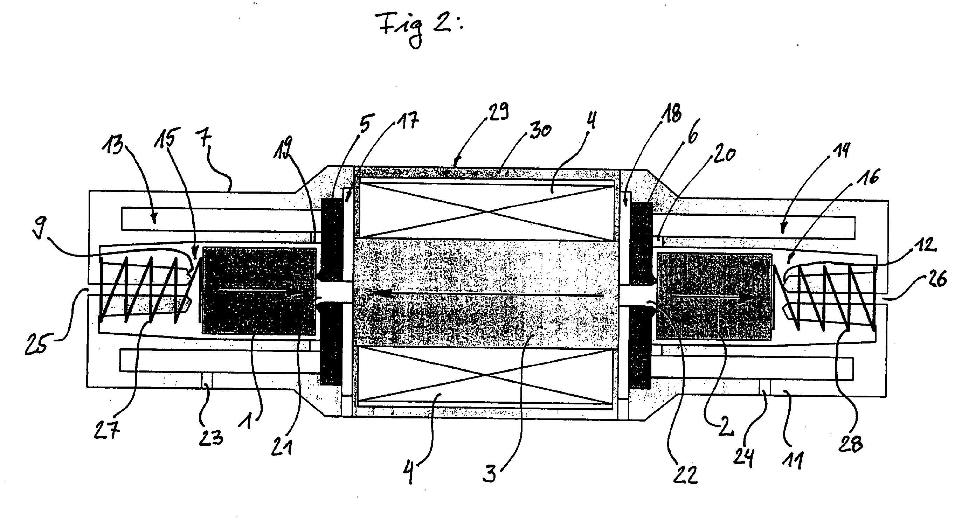

Ein zweites Ausführungsbeispiel ist in Fig. 2 gezeigt und unterscheidet sich nur darin, dass in dem rechten Ventilgehäuse 11 ebenfalls eine Feder 28 zwischen dem Ventilkörper 2 und dem Ventilsitz 12 angeordnet ist und somit auch eine Modulation des Fluidstroms von der Öffnung 26 zu der Öffnung 24 bzw. zu der Öffnung 10 möglich ist. Dadurch kann neben dem ersten Hauptventil 51 auch das zweite Hauptventil 52 moduliert werden.

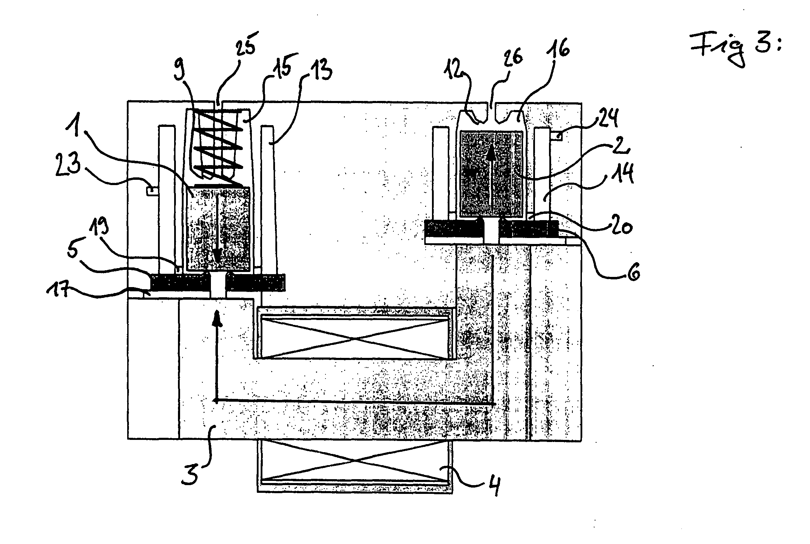

Ein drittes Ausführungsbeispiel ist in Fig. 3 gezeigt. Dieses unterscheidet sich von dem ersten Ausführungsbeispiel darin, dass die Spule 4 einen U-förmig abgewinkelten Kern aufweist und die Ventilgehäuse 7, 11 mit ihren Ventilkörpern 1, 2 auf entsprechend der U-form des Kern ausgerichteten, parallelen Achsen liegen. Dies bietet hinsichtlich der Anordnung der Fluidleitungen von dem Servoventil zu Hauptventilen Vorteile.

## Patentansprüche

1. Elektromagnetisches Doppelventil mit einer in einem Ventilgehäuse angeordneten elektromagnetischen Spule (4) und zwei in dem Ventilgehäuse, in ihren Polungsrichtungen verschieblichen Ventilkörpern (1, 2), die Dauermagneten aufweisen, die durch eine Magnetisierung der Spule (4) so verschoben werden, dass sich die Ventilkörper (1, 2) jeweils von einem Ventilsitz (5, 6)weg oder darauf zu bewegen und dadurch eine in dem jeweiligen Ventilsitz (5, 6) befindliche Ventilöffnung (21, 22) öffnen oder schließen.

2. Elektromagnetisches Doppelventil gemäß Anspruch 1, wobei die Polungsrichtungen der Dauermagneten (1, 2) entweder beide mit der zugehörigen Polungsrichtung der elektromagnetischen Spule (4) gleichgerichtet sind oder beide zu der zugehörigen Polungsrichtung der elektromagnetischen Spule (4) entgegengesetzt gerichtet sind.

3. Elektromagnetisches Doppelventil gemäß Anspruch 1 oder 2, wobei zwischen der elektromagnetischen Spule (4) und den Ventilkörpern (1, 2) jeweils ein innerer Ventilsitz (5, 6) angeordnet ist, der eine Öffnung (21, 22) mit einem bestimmten Querschnitt aufweist.

4. Elektromagnetisches Doppelventil gemäß einem der vorstehenden Ansprüche 1 oder 3, wobei auf den äußeren, gegenüberliegenden Seiten der Ventilkörper (1, 2) jeweils ein äußerer Ventilsitz (9, 12) angeordnet ist, der eine Öffnung (25, 26) mit einem bestimmten Querschnitt aufweist.

5. Elektromagnetisches Doppelventil gemäß einem der vorstehenden Ansprüche, wobei das Doppelventil drei in Reihe geschaltete Kammern (7, 30, 11) aufweist, die durch die inneren Ventilsitze (5, 6) geteilt sind und über deren Öffnungen (21, 22) in Fluidverbindung stehen.

6. Elektromagnetisches Doppelventil gemäß Anspruch 5, wobei die beiden Kammern (7, 11), in denen die Ventilkörper (1, 2) aufgenommen sind, mit den zugehörigen Ventilsitzen (5, 6, 9, 12), deren Öffnungen (12, 22, 25, 26) und jeweils einer weiteren Öffnung (23, 24) mit bestimmtem Querschnitt und den zugehörigen Ventilkörpern (1, 2) jeweils ein 3-Wege-Ventil bilden.

7. Elektromagnetisches Doppelventil gemäß einem der Ansprüche 5 oder 6, wobei in mindestens einer der Kammern (7, 11) eine Vorspanneinrichtung (27, 28) zum Vorspannen eines Ventilkörpers gegen den entsprechenden Ventilsitz (5, 6) vorgesehen ist.

8. Elektromagnetisches Doppelventil gemäß Anspruch 7, wobei in beiden äußeren Kammern (7, 11) jeweils eine Vorspanneinrichtung (27,28) zum Vorspannen des zugehörigen Ventilkörpers (1, 2) gegen den entsprechenden Ventilsitz (5, 6) vorgesehen ist.

9. Elektromagnetisches Doppelventil gemäß Anspruch 7, wobei durch Magnetisieren der Spule (4) bis zu einem bestimmten Betrag der nicht vorgespannte Ventilkörper (2) von seinem entsprechenden Ventilsitz (6) weggedrückt wird und ab einem bestimmten Magnetisierungsgrad der Spule (4) zusätzlich der vorgespannte Ventilkörper (1) durch Änderung der Magnetisierung der Spule (4) gegen die Vorspannrichtung der Vorspanneinrichtung (27) verschoben wird.

10. Elektromagnetisches Doppelventil gemäß Anspruch 7 oder 8, wobei ab einem bestimmten Magnetisierungsgrad der Spule (4) die vorgespannten Ventilkörper (1, 2) durch Änderung der Magnetisierung der Spule (4) gegen die Vorspannrichtungen der Vorspanneinrichtung (27, 28) verschoben werden, wobei die jeweiligen Verschiebungsgrößen auf Grund unterschiedlicher Vorspannkräfte der Vorspanneinrichtungen (27, 28) unterschiedlich groß sein können.

11. Elektromagnetisches Doppelventil gemäß einem der vorstehenden Ansprüche, wobei die Dauermagneten (1, 2) und die Spule (4) auf einer gemeinsamen Achse oder auf parallelen Achsen angeordnet sind.

12. Elektromagnetisches Doppelventil gemäß einem der Ansprüche 1 bis 11, wobei die Spule (4) abgewinkelt ausgebildet ist und Dauermagneten (1, 2) und die Spule (4) auf Achsen angeordnet sind, die in entsprechenden Winkeln zueinander stehen.

13. Elektromagnetisches Doppelventil gemäß einem der Ansprüche 1 bis 12, wobei die Spule (4) einen Kern (3) aufweist.

14. Elektromagnetisches Doppelventil gemäß Anspruch 13, wobei die Spule (4) einen abgewinkelten Kern (3) aufweist.

15. Elektromagnetisches Doppelventil gemäß Anspruch 14, wobei die Dauermagneten (1, 2) und die Spule (4) auf Achsen angeordnet sind, die in einem der Abwinklung des Kerns (3) entsprechenden Winkel zueinander stehen.

16. Elektromagnetisches Doppelventil gemäß einem der vorstehenden Ansprüche, das als Servoventil zum Regeln von Hauptventilen eingesetzt wird.
